# EUROPEAN PATENT SPECIFICATION

(11) **EP 1 954 411 B1**
(45) Date of publication and mention of the grant of the patent: **20.02.2013**
(21) Application number: 06819432.3
(22) Date of filing: 13.11.2006
(51) Int. Cl.: B05D 5/00, B05D 5/06, B05D 7/00

(54) **PROCESS FOR PREPARATION OF A MULTILAYER COATING SHEET**
VERFAHREN ZUR HERSTELLUNG EINER MEHRLAGIGEN BESCHICHTUNGSFOLIE
PROCEDE DE PREPARATION DESTINE A UNE FEUILLE DE REVETEMENT MULTICOUCHE

(30) Priority: 15.11.2005 EP 05110740; 19.12.2005 US 751207 P
(43) Date of publication of application: 13.08.2008
(73) Proprietor: Akzo Nobel Coatings International BV, 6824 BM Arnhem (NL)
(72) Inventor: BOERS, Vincent Matthijs, NL-2315 EB Leiden (NL); KIELSTRA, Harmen Jelke, NL-1054 JT Amsterdam (NL); KRUITHOF, Klaas Jan Hendrik, NL-2334 BG Leiden (NL); MARINUS, Edward, NL-2317 WT Leiden (NL)
(74) Representative: Schalkwijk, Pieter Cornelis
(86) International application number: PCT/EP2006/068393
(87) International publication number: WO 2007/057372

(56) References cited:
- EP-A- 1 355 242
- GB-A- 1 232 971
- US-A- 4 661 182
- US-A1- 2004 131 347
- US-A1- 2004 151 831
- US-B1- 6 768 814

## Description

The invention relates to a process for the preparation of a visual properties-matching multilayer coating sheet, to a process for partially finishing the surface of a substrate, and to a visual properties-matching multilayer coating sheet.

Processes of the above-mentioned type are known from US 5254192. This document describes a process for repairing a damaged portion of paint or coating on a vehicle to achieve an exact colour match. The damaged paint of a vehicle is repaired by using an adhesive backed film that has a layer of paint identical with the paint on the vehicle. The paint has been applied to the film and to the vehicle at the same time and under the same conditions and has been dried and cured under the same conditions. So, an identical colour match is achieved between the painted vehicle and the repair film in the event the paint on the vehicle is scratched or otherwise damaged. The paint layer can be a monocoat or a colour 'coat/clear coat layer.

A drawback of the known processes is that the repair film has to be produced in the vehicle factory together with the application of the original coating at a point in time when it is not known whether repair films will be required for the individual vehicle at all, let alone that the size and the shape of the required repair films are known. Furthermore, since the paint on the repair film is identical with the paint on the vehicle body applied in the factory and cured under the same conditions, limitations with respect to suitable base films apply. The factory applied paint of automobiles is typically cured at high temperature, for example at 140°C. Many polymeric materials which would be suitable as base films do not withstand the curing temperature of the factory applied automobile paint.

The factory applied and cured paint gives rise to a hard coating layer. However, the flexibility and elasticity of such a paint layer generally is insufficient for repair films, given that repair films often have to be stretched and bent during application, for example when the coating on curved substrates, such as exterior mirror cases of automobiles, is refinished with the repair films. Application of the known repair film to curved substrates can give rise to mechanical failure, such as cracking, of the coating layer.

The gloss of a factory applied coating of an automobile typically decreases with time due to the action of atmospheric and environmental etching. Also, the colour may undergo subtle changes over time. The known repair films produced together with the automobile are generally stored in the interior of the automobile or of a building where they are not exposed to atmospheric and environmental etching. Therefore, when the known repair film is used for repair of an automobile of which the gloss and colour values of the coating have changed under the influence of atmospheric and environmental etching, the repaired area will differ from the surrounding area in colour and gloss.

It should be noted that US 4661182 discloses a method and paint damage repair device; the device comprising a transparent polymeric film base, a paint coating on the surface of the film base, an adhesive on the paint coated film base and a removable paper backing on the adhesive for removal to expose the adhesive for adhesive application of the paint coated film base to the damage painted surface for the repair of such surface.

The invention seeks to provide a process which alleviates the above-mentioned drawbacks. More in particular, the object of the invention is to provide a process which allows the preparation of an individualized visual properties-matching multilayer coating sheet suitable for repair purposes. This means that the multilayer coating sheet can be made to individually match the visual properties, such as colour, effect, texture, and gloss, of a surface to be matched. Additionally, it should be possible to prepare the multilayer coating sheet in the individually required size and shape. It should also be possible to use a wide variety of suitable polymeric base film materials and to tune the hardness, flexibility, and elasticity of the multilayer coating sheet to the required values, so that application of the repair sheet to bent and curved substrates is possible without mechanical failure of the coating layer.

The invention now provides a process for the preparation of a visual properties-matching multilayer coating sheet having an elongation break of at least 150% comprising the steps of
a) determining the visual properties data of a surface to be matched in visual properties;
b) transmitting the data from step a) to a system configured to receive such data, and determination of the composition data of a coating composition having an acceptable match of visual properties;
c) preparing a visual properties-matching coating composition according to the determined composition data;
d) providing a base sheet layer optionally having an adhesive layer and a backing layer on one surface;
e) applying the visual properties-matching coating composition to one surface of the base sheet layer to form a colour- and/or effect-imparting coating layer;
f) optionally, drying the applied colour- and/or effect-imparting coating layer;
g) applying a crosslinkable clear coat layer on top of the colour- and/or effect-imparting coating layer;
h) drying and/or curing the clear coat layer; and
i) if the base sheet layer in step d) was provided without an adhesive layer and a backing layer; application of an adhesive layer and a backing layer to the uncoated surface of the base sheet layer.

With the process of the invention it is possible to prepare an individualized multilayer coating sheet which can be made to individually match the visual properties, such as colour, effect, texture and gloss, of a surface to be matched. The multilayer coating sheet can be prepared in the individually required size and shape. It is also possible to use a wide variety of suitable polymeric base film materials and to tune the hardness, flexibility, and elasticity of the multilayer coating sheet to the required values, so that application of the sheet to bent and curved substrates is possible without mechanical failure of the coating layer.

The process of the invention can be used for preparing multilayer coating sheets for coated substrates. The multilayer coating sheets prepared according to the process are particularly suitable for repairing the exterior coated surfaces of automobiles and large transportation vehicles, such as trains, trucks, buses, and boats. However, the multilayer coating sheet can also be used with great advantage on small vehicles or on surfaces of buildings or other constructions, for examples bridges. The multilayer coating sheet can also be used for all non-repair purposes where a visual properties-matching surface finishing is required.

The coated surfaces of automobiles and transportation vehicles often comprise a clear top coat on a colour- or effect-imparting base coat. The multilayer coating sheet is very suitable for matching the visual properties of such coated surfaces. However, the visual properties-matching multilayer coating sheet is equally suitable for repairing a substrate having a colour-imparting pigmented top coat. The multilayer coating sheets can be used to repair minor damage in the coating of a substrate, such as small scratches or dents. Alternatively, it is also possible to apply the multilayer coating sheet on a larger surface, such as an entire body panel of a motor vehicle, for example a door, a wing, or a hood.

In step a) of the process the visual property data of a surface to be matched are determined. Examples of visual property data are colour data, gloss data, effect data, and texture data. Depending on the type of surface to be matched for visual properties, one or more of these data have to be determined. Besides colour, a paint film shows numerous further visual properties. Colour can be expressed by the paint film reflection as a function of wavelength of visible light. Alternatively, colour can be expressed in accordance with the so-called CIE Lab system, as defined by the Commission International d'Eclairage, or similar systems, such as the CIE Luv, CIE XYZ systems or the Munsell system. Particularly when effect pigments, such as for example aluminium flake pigments or pearlescent pigments, are used, the look of a paint film is not one of uniform colour, but shows texture. This can include phenomena such as coarseness, glints, micro-brilliance, cloudiness, mottle, speckle, sparkle or glitter. In the following, texture is defined as the visible surface structure in the plane of the paint film depending on the size and organization of small constituent parts of a material. In this context, texture does not include roughness of the paint film but only the visual irregularities in the plane of the paint film. Structures smaller than the resolution of the human eye contribute to "colour", whereas larger structures generally also contribute to "texture".

Texture data can for instance include the particle size distribution of the effect pigments in the toner and the optical contrast, defined as the difference in lightness, between the effect pigment and the other pigments present in the coating. Also particles which are not directly observable by themselves can contribute to the overall visual appearance of a paint film. Des-orienters are an example of such particles. Effect pigments are generally flakes tending to take a horizontal orientation in a cured film. To prevent this, and to obtain more variation in flake orientation, spherical particles are used, referred to as des-orienters. Using des-orienters in a metallic paint results in more glitter. The determination of texture data is described in more detail in International patent application WO 01/25737. The visual property data can be determined by known instrumental analysis. Using an angle-dependent spectrophotometer colour and colour effect data can be uniquely identified. The instrumental analysis quantifies colour and colour effect parameters, examples of which are lightness, hue, and chroma data, and their angle dependence.

If the surface to be matched is the surface of a motor vehicle, an alternative way of determining visual property data is the retrieval of the so-called colour number, optionally refined by a colour variant code. The colour number is the code that represents the manufacturer's paint colour and colour effect, and can be found on the vehicle of interest. Paint colour and colour effect may vary within one colour number, for example due to minor variations between paint batches or application variables, such as relative humidity or temperature. Those variations can be taken into account using a variant database.

Still another way of recording visual property data involves the retrieval of the Vehicle Identification Number (VIN), which can be found on every motor vehicle. The VIN is a structured combination of characters assigned to a vehicle by the manufacturer for identification purposes. The VIN consists of three parts, to wit the World Manufacturer Identifier (WMI), the Vehicle Description Section (VDS), and the Vehicle Indicator Section (VIS). The VIS, in conjunction with the VDS, ensures a unique identification of all vehicles produced by each manufacturer. Once colour code variants have been linked to the combination of VIS and VDS, the VIN can be used to determine the visual property data of a vehicle. The use of the VIN to determine the visual property data of vehicles is described in more detail in European patent application EP 1355242 A.

It is also possible to use a combination of the above-mentioned methods for determination of the visual property data. Any other known method for determination of visual property data may also be used, for example visual comparison of the surface to be matched with colour swatches. The most appropriate and thus preferred method of determination may vary. For example, if the visual properties of an aged automobile are to be determined, an instrumental analysis of the visual properties may be preferred, because the visual properties may have changed too much over time to be adequately described by the colour code or the VIN.

In addition to the visual properties of the surface to be matched, also the size and the shape of the required visual properties-matching multilayer coating sheet can be determined. If the multilayer coating sheet is used for repair purposes, the required size and shape may be equal to or slightly larger than the damaged surface to be repaired.

Data such as the VIN and the colour code of a vehicle, as well as the size and the shape of the damage, can easily be retrieved and determined by a vehicle owner or fleet administrator. Thus, a visit to a vehicle body repair shop is not required for determining the visual properties data of a surface to be matched. If the visual properties data are determined by instrumental analysis, for example with a spectrophotometer, such a determination can be carried out quickly and without major out-of-service time of the vehicle in a vehicle body repair shop.

The determined data are transmitted to a system configured to receive such data. Transmittal of the data can be via any means suitable for transmitting such data. Typically, the data are transmitted via a communication network suitable for data transmission. The data may be transmitted by voice, for example via a telephone line. The data may also be transmitted in the written form, for example via a letter or telefax. In a preferred embodiment, the data are transmitted electronically, for example via the Internet by e-mail or via an on-line Internet connection. The system configured to receive such data typically is a computer system under the control of a suitable software program. A suitable computer may be a general purpose computer having a central processing unit, a memory, means for loading an application program into a defined address space of the memory, and a computer monitor. Also connection means to a communication network for data transfer from and to remote locations, such as a modem for connection to the Internet, are useful.

After transmission of the data, the composition data of a coating composition having an acceptable match of visual properties are determined. Coating composition data can be determined in a number of ways, i.e. by means of search procedures, calculations, or combinations of the two.

For example, use may be made of a databank comprising composition formulae having visual property data linked thereto. Using the determined visual property data of the surface to be matched in visual properties, the most closely matching coating composition formula can be found.

Alternatively, it is possible to use a databank having visual property formulae with spectral data linked thereto. Known calculation methods can be used to calculate the visual property data of the visual property formulae and compare them. Also, a databank can be used in which the absorption and reflection data, the so-called K and S data, of pigments are stored. Using K and S data in combination with pigment concentrations makes it possible to calculate the formula of which the visual property data most closely match the visual property data of the surface to be matched.

It is possible to combine the aforesaid search and calculation methods.

Once the coating composition data of a composition having an acceptable match of visual properties have been determined, a visual properties-matching coating composition is prepared by mixing the required components in the required ratio. In one embodiment, the coating composition data are displayed on a computer display or the data are printed out, and subsequently a coating composition is prepared according to the displayed or printed composition data. Alternatively, the computer can transfer the coating composition data directly to an automated mixing machine. The automated mixing machine may automatically prepare the visual properties-matching coating composition based on the composition data. When the size of the required visual properties-matching multilayer coating sheet has been determined and transmitted, it is possible to calculate the required amount of visual properties-matching coating composition on the basis of the surface to be coated. In this case, the visual properties-matching coating composition is suitably prepared in the required amount. Otherwise, it is possible to prepare a standard amount of the visual properties-matching coating composition. The visual properties-matching coating composition typically is a liquid coating composition which can be applied by spraying. Depending on the envisaged purpose of the visual properties-matching multilayer coating sheet, the visual properties-matching coating composition may also be a highly viscous liquid composition or a powder coating composition. The visual properties-matching coating composition may be water borne or solvent borne. It may suitably be prepared by mixing one or more colour- and/or effect-imparting modules, one or more binder modules, and a diluent module. Also a crosslinker may be added to the visual properties-matching coating composition.

If the colour- and/or effect-imparting coating layer formed from the visual properties-matching coating composition is not covered by a clear coat layer, it is preferred that the colour- and/or effect-imparting coating layer is crosslinkable. Crosslinkable coating layers can be obtained from two-component coating compositions based on hydroxy-functional binders and isocyanate-functional crosslinkers. Such compositions are well-known in the art and they are available as solvent borne compositions and as water borne compositions. Crosslinking may occur at ambient temperature or at elevated temperature.

It is also possible to use coating compositions which are curable by actinic radiation. In a still further embodiment, so-called dual cure compositions may be used, which are curable thermally and by actinic radiation. Such dual cure compositions may for example comprise binders having hydroxyl groups and (meth)acryloyl groups, and an isocyanate-functional crosslinker optionally having (meth)acryloyl groups.

After preparation of the visual properties-matching coating composition, the composition may be applied to the base sheet layer, as described further below. However, it is also possible to first apply the coating composition to a test panel and to determine if the visual properties of the applied coating have a sufficient match with the visual properties of the surface to be matched. Such a determination can be carried out by instrumental analysis, as described above. If the difference in visual properties is below a predetermined value, the coating composition can be applied to the base sheet layer. Otherwise, a new improved visual properties-matching coating composition may be prepared for use in the subsequent process steps. The above steps may be automated, carried out for example by a robot under the control of a suitably programmed computer.

The base sheet for the base sheet layer may be made of various materials. The base sheet may consist of an aluminium foil or an aluminized layer, for instance an aluminized polyester film, plastic or paper. The base sheet can be rigid or flexible. The base sheet has to be sufficiently flexible to follow the substrate's contours upon application. Therefore, the base sheet used in the process preferably is flexible and elastic. However, for spot repairs the spot frequently is sufficiently small to be treated as if it were a plane, which means that base sheet flexibility and elasticity are of minor relevance. When the fade-out technique as described further below is applied, the base sheet used suitably is transparent and colourless. In other embodiments coloured and/or non-transparent base sheets may be used. Coloured and/or non-transparent base sheets may be easier to handle and contribute to the hiding power of the multilayer coating sheet.

It will be readily understood that upon contact with the applied visual properties-matching coating composition the base sheet layer should not be dissolved or excessively swollen by the coating composition or components thereof. Swelling of the base sheet is also undesirable, because it can compromise the dimensional stability thereof.

The base sheet layer typically comprises a polymeric material, for example polyvinyl chloride, acetate, polyethylene, polyester, polyurethane, polyamide, an acrylic polymer, polyethylene naphthalate, polyethylene terephthalate or polycarbonate. Examples of other suitable materials are polyvinylalcohol, natural or modified starch, polyalkylene oxide, e.g. polyethylene oxide or polymers modified therewith, polymers and copolymers of (meth)acrylic amide or meth(acrylic) acid.

Also mixtures, hybrids, and blends of these materials can be used. The base sheet may consist of a single layer. Alternatively, the base sheet may be multilayered in itself. The base sheet may for example include a barrier or sealant layer that prevents any potentially damaging solvent of the coating composition to be applied on one surface of the base sheet from reaching the adhesive layer on the other surface of the base sheet. The base sheet may also comprise a surface layer which has been particularly adapted to be coated with a coating composition.

The base sheet layer suitably has a thickness of at least 10 µm, preferably at least 20 µm, and most preferably of at least 30 µm. Generally, the thickness of the base sheet layer is below 150 µm, preferably below 120 µm, and most preferably below 100 µm.

As mentioned above, the multilayer coating sheet may have to be bent and/or stretched during application to a substrate. Therefore, the base sheet layer is made of elastic and flexible material. The elongation at break of the material is at least 150%, and preferably at least 250%. Many of the polymeric materials mentioned above exhibit these properties.

The base sheet may be provided in the form of a roll. The roll may be inserted into a device that enables unrolling and die cutting activities, so as to provide a base sheet of the desired size and shape. In one embodiment, the unrolling, die cutting device is automated, and can be operated from a computer platform that enables digital design. A digital design, characterizing the required size and shape of the base sheet, is suitably based on the determined size and shape data transmitted in step b). The die cutting activities may alternatively be executed after application of the visual properties-matching coating composition. It is also possible for die cutting activities to be executed at both stages of the process.

If for example a visual properties-matching multilayer coating sheet for a bonnet of a motor vehicle is required, the software platform may suggest the best fitting form, either through calculation, using a vehicle part dimensions database, or using three-dimensional imaging software in combination with for example digital photography. The unrolling device then unrolls and die cuts at a desired length. The width of the resultant rectangular or square piece of base sheet resembles the roll width. The base sheet is fed into a base sheet coating area, where the base sheet is coated either completely or partly according to the desired end size and shape. The latter example might include fade-out areas, preferably situated at the outer border of the design. From there, the rectangular or square base sheet - with the desired coated and optionally faded-out areas design - is fed into a die cutting area, where the final coated sheet is die cut to the desired end form. This end form may include larger parts of uncoated base sheet.

In another embodiment, the base sheet is provided in the form of a stack of sheets, in variable forms with variable surface areas. The forms might for example be rectangular, oval or round. The surface area generally ranges from 1 mm² to 10 m², and preferably from 0.5 cm² to 5 m².

The base sheet layer optionally is provided with an adhesive layer and a backing layer on one surface. The adhesive layer serves to adhesively bond the visual properties-matching multilayer coating sheet to a substrate. In one embodiment, the adhesive is a pressure-sensitive adhesive. Alternatively, the adhesive may be activatable thermally or by actinic radiation. The adhesive layer may comprise further functional additives in order to include additional desirable properties in the adhesive layer. For example, the adhesive layer may comprise anti-corrosive ingredients, such as anti-corrosive pigments, providing the visual properties-matching multilayer coating sheet with anti-corrosive properties.

It is preferred that the adhesive used increases in adhesive force over time after adhesively binding the visual properties-matching multilayer coating sheet to a substrate. If the adhesive initially has a low tack, re-positioning of the visual properties-matching multilayer coating sheet immediately during application is possible, thus facilitating the application achieving exact positioning and an invisible repair.

The adhesive layer can be applied to the base sheet by any known application technique suitable for this purpose. Examples include application by a knife, roll coating, and transfer coating operations. The adhesive layer may be transparent. The thickness of the adhesive layer suitably is at least 2 µm, preferably at least 5 µm. Generally, the thickness of the adhesive layer is below 50 µm, preferably below 35 µm.

A backing layer is applied over the adhesive layer. The materials of backing layers normally used for this purpose include paper, e.g. crepe, flatback, tissue, and polymer films, e.g. polyester, polyvinyl chloride, polypropylene, polyethylene, fluoropolymers, cellulose acetate, and polyurethane. The backing layer may suitably be coated with a release agent to provide easy removal of the backing layer upon application of the visual properties-matching multilayer coating sheet. The release agents are typically based on binders containing silicone, a substance pressure-sensitive adhesives do not readily bond with. Acrylic emulsion release agents are an example of non-silicone-based release agents.

It is preferred to have air egress channels in the adhesive layer. Such air egress channels facilitate the application of the multilayer coating sheet to a substrate. Due to easier removal of air bubbles, a smooth coverage and fewer wrinkles can be achieved. Air egress channels can be created by an embossed surface of the backing layer facing the adhesive layer. Other methods of creating air egress channels are equally suitable, for example by the presence of microscopic glass spheres in or on the adhesive layer. A layer of microscopic glass spheres shields the adhesive, allowing the multilayer coating sheet to be repositioned during application. When pressure is applied, the glass spheres are crushed into the adhesive, giving rise to air egress channels and instant high bond strength.

Suitable base sheet layers provided with an adhesive layer and a backing layer are available commercially, for example from Avery Dennison under the trade designation Avery 6904 Easy Apply.

When the base sheet layer is provided without an adhesive layer and a backing layer, these layers can be applied in a later step of the process.

The visual properties-matching coating composition is applied to one surface of the base sheet layer. In one embodiment, the coating composition is a base coat composition such as is typically used in base coat/clear coat systems on motor vehicles. Such a base coat composition is a liquid coating composition comprising pigments and/or effect-imparting particles, such as mica particles or metal flakes. Application thereof is preferably carried out by spraying. However, other application methods are also possible, provided that the effect-imparting particles are oriented in such a way that a colour effect can be matched independent of the viewing angle. Suitable base coat compositions are available commercially, for example from Akzo Nobel Car Refinishes under the trade designations Autowave and Autobase Plus. If the visual properties-matching coating composition does not comprise effect-imparting particles requiring a specific orientation in the coating layer, the above restrictions on application methods do not apply and all known application methods can be used, such as rolling, curtain coating, brushing, hotmelt application, air brushing, or ink-jet printing.

It may be that a visual properties-matching coating composition having an acceptable match of visible properties cannot be found in the data file containing coating composition data. In this case it may nevertheless be possible to prepare a visual properties-matching multilayer coating sheet according to the process of the invention. A coating composition having the best possible match of visible properties is selected and applied to the base sheet layer as described above. The base sheet layer should be transparent. The colour- and/or effect-imparting coating layer is applied to the base sheet layer so as to achieve a hiding power gradient within the coated area, with full hiding power being achieved in the centre of the area of the applied coating layer and the hiding power decreasing towards at least one border of the area of the applied coating layer. This can for example be achieved by gradually decreasing the applied layer thickness of the coating towards the at least one border of the area of the applied coating layer. This technique is commonly known in the refinish sector as fade-out. When the slope of the colour and effect difference over a certain distance does not exceed a certain threshold value, the resulting colour and effect difference is practically invisible to the human eye.

The invention also relates to a multilayer coating sheet wherein the fade-out technique has been applied. Such a visual properties-matching multilayer coating sheet having an elongation at break of at least 150% comprises, in the following order,
a) a backing layer,
b) an adhesive layer,
c) a transparent base sheet layer,
d) a colour- and/or effect-imparting coating layer, and
e) a crosslinked clear coat layer,
wherein the hiding power of the colour- and/or effect-imparting coating layer decreases towards at least one border of the coating layer.

Such a multilayer coating sheet is particularly suitable for repair of minor damage to the exterior coating of an automobile.

The multilayer coating sheet suitably has a thickness of at least 40 µm, preferably at least 50 µm, and more preferably at least 60 µm. The thickness generally is below 500 µm, preferably below 300 µm, and more preferably below 200 µm. In view of the required elasticity upon application of the multilayer coating sheet to a substrate, the elongation at break of the multilayer coating sheet suitably is essentially the same as described above for the base sheet layer. In order to achieve the required elongation at break values, the crosslink density of the coating layer(s) of the multilayer coating sheet before application to a substrate preferably is sufficiently low. When elasticity and elongation upon application are not critical, for example in the case of application of the multilayer coating sheet to a non-curved plane substrate, the crosslink density of the coating layer(s) may be higher, for example about 50 kPa/K.

After application of the visual properties-matching coating composition, the applied colour- and/or effect-imparting coating layer may be subjected to a drying phase. Drying includes physical drying by evaporation of solvent and/or water and curing by chemical crosslinking reactions. If required, drying can be accelerated by heating, irradiation with (near) infrared radiation, or air blowing. When the coating is susceptible to actinic radiation-induced curing, the applied coating may be irradiated with actinic radiation, such as ultraviolet light or electron beam radiation. When the coating is prepared from a dual cure coating composition, it may be preferred to carry out thermal curing after application of the coating composition and to suspend curing by actinic radiation until after the visual properties-matching multilayer coating sheet has been adhesively bonded to a substrate. Such a stepwise curing of the composition has the advantage that the visual properties-matching multilayer coating sheet remains sufficiently flexible and elastic to allow stretching and bending during application to a curved substrate without mechanical failure such as cracking of the coating layer. A post-application-to-a-substrate cure step by actinic radiation may provide the coating layer with the required hardness and resistance properties. The thickness of the colour- and/or effect-imparting coating layer.suitably is in the range of 5 to 30 µm. In fade-out areas as described above, the thickness may be below the indicated range.

After application of the visual properties-matching coating composition to the base sheet layer, an optional spectrophotometric control system measurement of the colour and/or effect data of the applied coating layer may be executed in order to check if the visual properties have an acceptable match with the visual property data determined in step a). If the visual property data of the applied coating layer differ by more than a predetermined threshold value, it may be required to select a better matching coating composition or to apply the fade-out technique as described above. The optional control step may alternatively or additionally also be carried out after application of the optional clear coat layer, as described further below.

When the determination of the visual property data in step a) of the process indicates that a clear coat layer is required to match the visual properties, a clear coat layer is applied on top of the colour- and/or effect-imparting coating layer. The clear coat layer may be applied on top of the dried colour- and/or effect-imparting coating layer. Alternatively, the clear coat may be applied wet-on-wet on top of the colour- and/or effect-imparting coating layer. Wet-on-wet application means that the underlying colour- and/or effect-imparting coating layer is not fully dried or cured before application of the clear coat. It is also possible for the colour- and/or effect-imparting coating layer to be partially dried, for example by subjecting it to a so-called flash-off phase of 5 to 15 minutes, during which a substantial part of the liquid diluent can evaporate.

Application of the clear coat may be done by spraying. However, other means of application, such as mentioned above for the visual properties-matching coating composition, may be employed as well. The choice of the appropriate application method may depend on the visual properties, such as gloss, to be matched. The application method giving the best match of visual properties is generally preferred. The clear coat layer is crosslinkable, as described above in respect of the visual properties-matching coating composition. Suitable clear coat compositions are available commercially, for example from Akzo Nobel Car Refinishes under the trade designation Autoclear. So far, good results, in particular with respect to weather resistance of the applied multilayer coating sheet, have been obtained when the clear coat comprises a mixture of a polyester polyol, a polyurethane polyol, an organic solvent, and a flexible isocyanate-functional crosslinker. In one embodiment, the isocyanate-functional prepolymer Xthane IW-P26, commercially available from ITWC, Inc., Malcom, Iowa, United States of America, has been used as crosslinker. The molar ratio of isocyanate-groups and hydroxyl groups in the clear coat suitably is in the range of 1.5 to 0.8, for example 1.2. Generally, the clear coat additionally comprises other components and additives which are usually present in automotive refinish top coats, such as crosslinking catalyst, wetting agents, and light stabilizers.

After application, the clear coat is subjected to a drying and/or curing step, as described above in respect of the visual properties-matching coating composition. The clear coat layer suitably has a layer thickness in the range of 20 to 80 µm.

In another embodiment, the clear coat is a flexible, solid polyurethane film having a very low crosslink density. The clear coat layer contains unreacted polymerizable olefinically unsaturated groups, such as (meth)acryloyl groups, with at least a part of the unreacted polymerizable olefinically unsaturated groups being maleimide groups.

Such a clear coat layer can be prepared by mixing and reacting hydroxyl- and isocyanate-functional prepolymers. Either or both of the prepolymers additionally comprise the polymerizable olefinically unsaturated groups. As an example of a hydroxyl-functional prepolymer comprising polymerizable olefinically unsaturated groups the addition product of (meth)acrylic acid and butanediol diglycidylether may be mentioned. An example of an isocyanate-functional prepolymer comprising polymerizable olefinically unsaturated groups is the addition product of 1 mole of a diisocyanate trimer and 1 mole of a hydroxyl-functional maleimide.

The glass transition temperature (Tg) of the clear coat layer before irradiation with actinic radiation is in the range of -40 to 40°C, preferably between 0 and 20°C. Such a clear coat also has a very high flexibility. The elongation at break at room temperature preferably is in the range of about 300% to about 500%.

After application of the multilayer coating sheet to a substrate, post-curing of the clear coat by polymerization of the olefinically unsaturated groups can be initiated by irradiation with UV light or visible light. UV-A light or visible light is preferred. Upon post-curing the Tg of the clear coat increases by about 20 to 50°C. The final Tg of the post-cured clear coat preferably is in the range of 40 to 65°C, which is similar to the Tg of commercial clear coats. Such multilayer coating sheets which were post-cured after application exhibit a favourable weather resistance.

The presence of maleimide groups has the advantage of a higher Tg increase upon curing as compared to a clear coat having acryloyl groups only, based on a comparable concentration of polymerizable, olefinically unsaturated groups. In addition, maleimide groups reduce oxygen inhibition during radiation curing.

If the base sheet layer was originally provided without an adhesive layer and a backing, an adhesive layer and a backing layer can be applied to the uncoated surface of the backing layer after application of the coating layers.

As mentioned above, the visual properties-matching multilayer coating sheet obtainable by the process of the invention is very suitable for partial finishing of a substrate. Partial finishing of substrates includes the repair of small scratches or dents in a larger surface of a substrate, for example a scratch in the door of an automobile. Partial finishing also includes the application of a visual properties-matching multilayer coating sheet to an entire body part of a motor vehicle. Also, the application of graphics and lettering in predetermined colours and effects on large transportation vehicles, such as trains, buses, trucks, and airplanes is included.

Accordingly, the invention also relates to a second process for partial finishing of a substrate. This second process comprises the preparation of a visual properties-matching multilayer coating sheet as described above and, additionally, in any workable order, the steps of
j) removing the backing layer from the visual properties-matching multilayer coating sheet;
k) applying the visual properties-matching multilayer coating sheet to the surface of the substrate to be finished, with the adhesive layer facing the substrate surface to be finished and forming an adhesive bond between the visual properties-matching multilayer coating sheet and the substrate surface; and
I) optionally curing the coating layer(s) of the visual properties-matching multilayer coating sheet applied in steps e) and g).

The process is also very suitable for refinishing a damaged substrate. Depending on the condition of the substrate to be partially finished, it may be appropriate to carry out one or more additional preceding steps in order to prepare the substrate for the application of the visual properties-matching multilayer coating sheet. Examples of such additional preparation steps are cleaning of the substrate, including degreasing and removal of existing coating layers, filling of dents with a suitable filler, such as a putty, application of a primer layer to the substrate, and sanding of the substrate. Also removal of dust by pressurized air or with a dust cloth may be beneficial.

The process of partially finishing the surface of a substrate includes the step of removing the backing layer from the visual properties-matching multilayer coating sheet, thus exposing the adhesive layer of the visual properties-matching multilayer coating sheet. In one embodiment, the backing layer is removed completely in a single step. Alternatively, it is also possible to remove the backing layer partly and to star with the application of the multilayer coating sheet to a substrate. Removal of the backing sheet and application may then be continued successively until the whole multilayer coating sheet has been applied to the substrate. This stepwise procedure may be preferred for relatively large surfaces to be finished with a single multilayer coating sheet, because the stepwise procedure may enhance applicability and lead to a better quality of the end result. The backing layer can normally be removed manually.

When the adhesive layer of the visual properties-matching multilayer coating sheet comprises a pressure-sensitive adhesive, no further preparation steps of the adhesive layer are generally required prior to the application of the coating sheet to the substrate. If other types of adhesives are used, an activation ,step to activate the adhesive may be required. Depending on the type of adhesive and the method of activation, the activation step may be carried out prior to, during and/or after application. Examples of activation steps are treatment of the adhesive surface with water or an appropriate organic solvent. In the case of heat-sensitive adhesives, heat treatment may be required.

The visual properties-matching multilayer coating sheet is subsequently applied to the surface of the substrate to be finished, with the adhesive layer facing the substrate surface to be finished and forming an adhesive bond between the visual properties-matching multilayer coating sheet and the substrate surface. As mentioned above, the substrate surface may be a two-dimensional object or a three-dimensional object having a curved surface. Since the visual properties-matching multilayer coating sheet is essentially flat, it has to be made to conform to the substrate during application in the case of three-dimensionally shaped substrates. If the adhesive layer comprises a pressure-sensitive adhesive, pressure is applied to the multilayer coating sheet after it has been made to conform and positioned on the substrate in order to form an adhesive bond between the multilayer coating sheet and the substrate. Application of the visual properties-matching multilayer coating sheet to a substrate may be carried out manually, optionally using suitable tools, such as a squeegee, a felt-covered squeegee, or gloves. Gloves prevent contamination and can lower the friction while moving the hand or a squeegee across the surface of the visual properties-matching multilayer coating sheet and simultaneously applying pressure. Also other tools, such as a razor knife, a heat source for heating the multilayer coating sheet, or a rivet brush, may be used. The application of larger visual properties-matching multilayer coating sheets, for example on trucks or buses, may be aided by a mechanical sheet guidance system, enabling the application of longer stretches of sheet in a single operation. It is also possible to apply the multilayer coating sheet to a substrate by the so-called wet application method. By wetting the surface of the substrate with an application fluid, the film can be positioned on the substrate without firmly adhering to it. In one embodiment, the application fluid can be an aqueous detergent solution, for example 1 weight-% of detergent in water. Alternatively, the application fluid can be an organic solvent or be based on an organic solvent, such as ethanol or isopropyl alcohol. One advantage of using organic solvent based application fluids is the combination of slideability and initial tack. The latter enables the polymer sheet to be fixed when desired, while maintaining its easy repositionability. The initial tack is based upon the solvent activation of the adhesive on the back of the foil.

The application fluid may also be a mixture of water and organic solvents.

The detergent liquid provides slideability and positionability to the pressure-sensitive coating sheet until the water film has been removed. A plastic squeegee can be used for the removal of the water layer, preferably by squeegeeing from the centre towards the edges of the multilayer coating sheet and gradually increasing the applied force until apparently most or all of the water has been removed.

If, for example, a visual properties-matching multilayer coating sheet is to be applied to the bonnet of an automobile, the backing sheet can be removed and the sheet applied at once by two individuals, one on either side, holding the film. After the sheet has been applied to the bonnet, repositioning, air regress and pressurized adhesion can be executed by one person. The sheet is made to conform and adhere to the front of the bonnet, without air bubbles or any other surface defects being visible. On all sides of the bonnet, a certain surplus of sheet remains as a free form. This surplus is folded to the sides and the backside of the bonnet, and adhered as smoothly as possible.

If the coating layer(s) of the multilayer coating sheet have not been fully cured before application of the sheet to a substrate, an additional post-application cure step can be carried out after application of the sheet to a substrate. The post-application cure may be thermally initiated, for example by heating with a hot air blower or by irradiation with (near) infrared radiation. Alternatively, the post-application cure may be initiated by actinic radiation, such as ultraviolet radiation. Subsequent to the application of the visual properties-matching multilayer coating sheet to the surface of a substrate, and after the optional post-application curing step of the coating layers, matching of the visual properties of the multilayer coating sheet and the surrounding surface may optionally be further improved by one or more after-treatment steps. Examples of such after-treatment steps are polishing of the surface of the multilayer coating sheet and the surrounding surface, and heat treatment of the multilayer coating sheet. Warming of the multilayer coating sheet by heat treatment can cause the settlement of minor irregularities in one or more of the layers of the multilayer coating sheet, such as in the adhesive layer or in the coating layers.

The processes according to the invention have the additional advantage that damage to a coating layer, such as a dent, a scratch, or a bare area, can be repaired in less processing time and without damaging the area around the damaged area. Since spraying of coating compositions is not carried out on the substrate, such as a motor vehicle, it is not required to tape off the parts of the coating adjacent to the damaged area, since there is no need for protection against the deposition of spray mist. Thus, when a vehicle is partly refinished, the out-of-service time of the vehicle for refinishing can be significantly reduced. '

In a preferred embodiment of the process for preparation of a visual properties-matching multilayer coating sheet according to the invention, steps c) to i) are carried out in a central multilayer coating sheet manufacturing location. A central multilayer coating sheet manufacturing location receives the visual property data of a surface to be matched in visual properties from two or more remote locations. Generally, the central location will serve a multitude, typically 20 or more, for example up to 500, local body shops. A central multilayer coating sheet manufacturing location may for example serve the body shops of a country or a part thereof, or a continent, or even the whole world.

In this case local paint storage, mixing, and spraying operations at a vehicle body repair shop are not required, which saves time and money. Additionally, the preparation of visual properties-matching multilayer coating sheets can be fully automated in a dedicated central location, which again saves time and money. Automated preparation of the coating sheets has the further advantage that the exposure of human workers to potentially hazardous solvent fumes during application and drying of coating compositions is minimized. If the data determined in step a) are transmitted electronically via e-mail on one day, the visual properties-matching multilayer coating sheets may be prepared fully automatically under the control of a computer, for example overnight, and the finished visual properties-matching multilayer coating sheets can be posted to the vehicle owner or a vehicle body repair shop the following day, as the case may be. The out-of-service time of a vehicle can be further reduced in such an embodiment.

## Claims

1. A process for the preparation of a visual properties-matching multilayer coating sheet having an elongation at break of at least 150%, comprising the steps of
a) determining the visual property data of a surface to be matched in visual properties:
b) transmitting the data from step a) to a system configured to receive such data, and determination of the composition data of a coating composition having an acceptable match of visual properties;
c) preparing a visual properties-matching coating composition according to the determined composition data;
d) providing a base sheet layer optionally having an adhesive layer and a backing layer on one surface;
e) applying the visual properties-matching coating composition to one surface of the base sheet layer to form a colour- and/or effect-imparting coating layer;
f) optionally, drying the applied colour- and/or effect-imparting coating layer;
g) applying a crosslinkable clear coat layer on top of the colour- and/or effect-imparting coating layer;
h) drying and curing the clear coat layer; and
i) if the base sheet layer in step d) was provided without an adhesive layer and a backing layer, application of an adhesive layer and a backing layer to the uncoated surface of the base sheet layer.

2. A process according to claim 1 wherein the data in step b) are transmitted via a communication network, and wherein steps c) to i) are carried out in a central multilayer coating sheet manufacturing location.

3. A process according to claim 1 or 2 wherein in step a) also the size and the shape of the required visual properties-matching multilayer coating sheet are determined.

4. A process for partially finishing the surface of a substrate, comprising the preparation of a visual properties-matching multilayer coating sheet according to claim 1, and additionally the steps of
j) removing the backing layer from the visual properties-matching multilayer coating sheet;
k) applying the visual properties-matching multilayer coating sheet to the surface of the substrate to be finished, with the adhesive layer facing the substrate surface to be finished and forming an adhesive bond between the visual properties-matching multilayer coating sheet and the substrate surface; and
l) optionally curing the coating layer(s) of the visual properties-matching multilayer coating sheet applied in steps e) and g).

5. A process according to claim 4 wherein the surface of an automobile or a large transportation vehicle is partially finished.

6. A process according to claim 4 or 5 wherein the process is used to refinish a damaged substrate.

7. A visual properties-matching multilayer coating sheet having an elongation at break of at least 150%, comprising, in the following order,
a) a backing layer,
b) an adhesive layer,
c) a transparent base sheet layer,
d) a colour- and/or effect-imparting coating layer, and
e) a crosslinked clear coat layer,
wherein the hiding power of the colour- and/or effect-imparting coating layer decreases towards at least one border of the coating layer.

8. Use of the visual properties-matching multilayer coating sheet according to claim 7 for repair of minor damage to the exterior coating of an automobile.

## Patentansprüche

1. Ein Verfahren zur Herstellung einer mehrlagigen, in ihren visuellen Eigenschaften angepassten Beschichtungsfolie mit einer Bruchdehnung von mindestens 150 %, umfassend die Schritte:
a) Bestimmen der Daten von visuellen Eigenschaften einer Oberfläche, an die die visuellen Eigenschaften angepasst werden sollen;
b) Übertragen der Daten aus Schritt a) an ein System, welches zum Empfang solcher Daten konfiguriert ist, und Bestimmen der Zusammensetzungsdaten einer Beschichtungszusammensetzung mit einer akzeptablen Anpassung der visuellen Eigenschaften;
c) Herstellen einer in ihren visuellen Eigenschaften angepassten Beschichtungszusammensetzung gemäß den bestimmten Zusammensetzungsdaten;
d) Bereitstellen einer Basisfolienschicht gegebenenfalls mit einer Haftschicht und einer Trägerschicht auf einer Oberfläche;
e) Aufbringen der in ihren visuellen Eigenschaften angepassten Beschichtungszusammensetzung auf eine Oberfläche der Basisfolienschicht, um eine farb- und/oder effektgebende Beschichtungsschicht zu bilden;
f) gegebenenfalls Trocknen der aufgebrachten farb- und/oder effektgebenden Beschichtungsschicht;
g) Aufbringen einer vernetzbaren klaren Deckschicht auf die farb- und/oder effektgebende Beschichtungsschicht;
h) Trocknen und Aushärten der klaren Deckschicht; und
i) wenn die Basisfolienschicht in Schritt d) ohne eine Haftschicht und eine Trägerschicht bereitgestellt wurde, Aufbringen einer Haftschicht und einer Trägerschicht auf die unbeschichtete Oberfläche der Basisfolienschicht.

2. Ein Verfahren nach Anspruch 1, wobei die Daten in Schritt b) über ein Kommunikationsnetzwerk übertragen werden, und wobei die Schritte c) bis i) in einer zentralen Produktionsstätte für eine Mehrlagenbeschichtungsfolie durchgeführt werden.

3. Ein Verfahren nach Anspruch 1 oder 2, wobei in Schritt a) auch die Größe und die Form der benötigten mehrlagigen, in ihren visuellen Eigenschaften angepassten Beschichtungsfolie bestimmt werden.

4. Ein Verfahren zum teilweisen Oberflächenbehandeln der Oberfläche eines Substrats, umfassend die Herstellung einer mehrlagigen, in ihren visuellen Eigenschaften angepassten Beschichtungsfolie nach Anspruch 1, und zusätzlich die Schritte des
j) Entfernens der Trägerschicht von der mehrlagigen, in ihren visuellen Eigenschaften angepassten Beschichtungsfolie;
k) Aufbringens der mehrlagigen, in ihren visuellen Eigenschaften angepassten Beschichtungsfolie auf der Oberfläche des oberflächenzubehandelnden Substrats, so dass die Haftschicht auf die oberflächenzubehandelnde Substratoberfläche zeigt, und des Ausbildens einer Haftverbindung zwischen der mehrlagigen, in ihren visuellen Eigenschaften angepassten Beschichtungsfolie und der Substratoberfläche; und
l) gegebenenfalls Härtens der Beschichtungsschicht(en) der in den Schritten e) und g) aufgebrachten mehrlagigen, in ihren visuellen Eigenschaften angepassten Beschichtungsfolie.

5. Ein Verfahren nach Anspruch 4, wobei die Oberfläche eines Automobils oder eines großen Transportfahrzeugs teilweise oberflächenbehandelt wird.

6. Ein Verfahren nach Anspruch 4 oder 5, wobei das Verfahren verwendet wird, um ein beschädigtes Substrat auszubessern.

7. Eine mehrlagige, in ihren visuellen Eigenschaften angepasste Beschichtungsfolie mit einer Bruchdehnung von mindestens 150 %, umfassend, in der folgenden Reihenfolge:
a) eine Trägerschicht,
b) eine Haftschicht,
c) eine transparente Basisfolienschicht,
d) eine farb- und/oder effektgebende Beschichtungsschicht, und
e) eine vernetzte klare Deckschicht, wobei das Deckvermögen der farb- und/oder effektgebenden Beschichtungsschicht zu mindestens einer Grenze der Beschichtungsschicht hin abnimmt.

8. Verwendung der mehrlagigen, in ihren visuellen Eigenschaften angepassten Beschichtungsfolie nach Anspruch 7 zur Reparatur kleinerer Beschädigungen an der Außenbeschichtung eines Automobils.

## Revendications

1. Processus de préparation d'un revêtement multicouches d'adaptation de propriétés visuelles ayant un allongement en rupture d'au moins 150%, comprenant les étapes consistant à
a) déterminer les données de propriétés visuelles d'une surface à adapter en termes de propriétés visuelles ;
b) transmettre les données de l'étape a) à un système configuré pour recevoir lesdites données, et déterminer les données de composition d'une composition de revêtement ayant une adaptation de propriétés visuelles acceptable ;
c) préparer une composition de revêtement d'adaptation de propriétés visuelles selon les données de composition déterminées ;
d) prévoir une couche de base ayant une couche adhésive et une couche de support sur une surface ;
e) appliquer la composition de revêtement d'adaptation de propriétés visuelles sur une surface de la couche de base afin de former une couche de revêtement conférant une couleur et/ou un effet ;
f) faire éventuellement sécher la couche de revêtement conférant une couleur et/ou un effet ;
g) appliquer une couche de revêtement transparent réticulable pardessus la couche de revêtement conférant une couleur et/ou un effet ;
h) faire sécher et durcir la couche de revêtement transparent ; et
i) si la couche de base de l'étape d) a été prévue sans couche adhésive ni couche de support, appliquer une couche adhésive et une couche de support sur la surface non revêtue de la couche de base.

2. Processus selon la revendication 1, dans lequel les données de l'étape b) sont transmises via un réseau de communication, et dans lequel les étapes c) à i) sont exécutées sur un site de fabrication de revêtement multicouches central.

3. Processus selon la revendication 1 ou 2, dans lequel la taille et la forme du revêtement multicouches d'adaptation de propriétés visuelles sont déterminées à l'étape a).

4. Processus de finition partielle de la surface d'un substrat, comprenant la préparation d'un revêtement multicouches d'adaptation de propriétés visuelles selon la revendication 1, et en outre les étapes consistant à j) supprimer la couche de support du revêtement multicouches d'adaptation de propriétés visuelles ;
k) appliquer ledit revêtement multicouches d'adaptation de propriétés visuelles sur la surface du substrat à finir, avec la couche adhésive tournée vers la surface du substrat à finir, et former une liaison adhésive entre ledit revêtement multicouches d'adaptation de propriétés visuelles et la surface du substrat ; et
l) faire éventuellement durcir la/les couche(s) de revêtement dudit revêtement multicouches d'adaptation de propriétés visuelles appliqué aux étapes e) et g).

5. Processus selon la revendication 4, dans lequel la surface d'une automobile ou d'un grand véhicule de transport est partiellement finie.

6. Processus selon la revendication 4 ou 5, dans lequel ledit processus est utilisé pour finir à nouveau un substrat endommagé.

7. Revêtement multicouches d'adaptation de propriétés visuelles ayant un allongement en rupture d'au moins 150%, comprenant, dans l'ordre suivant :
a) une couche de support,
b) une couche adhésive,
c) une couche de base transparente,
d) une couche de revêtement conférant une couleur et/ou un effet, et
e) une couche de revêtement transparent réticulé
dans lequel le pouvoir masquant de la dite couche de revêtement conférant une couleur et/ou un effet diminue vers au moins un bord de la couche de revêtement.

8. Utilisation du revêtement multicouches d'adaptation de propriétés visuelles selon la revendication 7 pour réparer des dommages mineurs sur le revêtement extérieur d'une automobile.
